# EUROPEAN PATENT APPLICATION

(11) **EP 2 151 755 A1**
(43) Date of publication of application: **10.02.2010**
(21) Application number: 09166697.4
(22) Date of filing: 29.07.2009
(51) Int. Cl.: G06F 9/445, G06F 21/00

(54) **Electronic device and method for updating bios thereof**

(30) Priority: 30.07.2008 TW 97128812
(71) Applicant: Pegatron Corporation, Taipei City 112, Taiwan (CN)
(72) Inventor: Liu, Hsien-Chung, Taipei City 112 (TW); Huang, Wen-Lin, Taipei City 112 (TW)
(74) Representative: Jordan, Volker Otto Wilhelm

(57) **Abstract**

This invention discloses a method for updating a basic input/output system (BIOS). The BIOS is stored in a memory of an electronic device. An embedded controller (EC) is electrically connected to the memory and a processor. The processor is electrically connected to the memory and executes the BIOS. The method for updating the BIOS includes the following steps. First, a write instruction is sent to the EC. Afterward, the EC receives the write instruction and sends a system management interrupt (SMI) to the processor. Then, the processor receives the SMI and sends an identification code to the EC. Then, the EC receives the identification code and determines whether the identification code matches a security code. If the identification code matches the security code, the EC allows the memory to be writable to update the BIOS.

## Description

### CROSS-REFERENCE TO RELATED APPLICATIONS

This Non-provisional application claims priority under 35 U.S.C. §119(a) on Patent Application No(s). 097128812 filed in Taiwan, Republic of China on Jul. 30, 2008, the entire contents of which are hereby incorporated by reference.

### BACKGROUND OF THE INVENTION

### Field of the Invention

The invention relates to a method for updating a basic input/output system (BIOS) and an electronic device and, more particularly, to a method for updating a BIOS and an electronic device capable of preventing the BIOS from being randomly written.

### Description of the Related Art

A basic input/output system (BIOS) contains the executable code required to control peripheral input/output (I/O) devices. A central processing unit (CPU) use the BIOS to perform operation such as initializing, diagnosing, loading a kernel of an operating system (OS) and peripheral input/output (I/O) and so on.

However, the BIOS has two conflicting requirements. That is, the BIOS needs to be protected perfectly and also can be amended. The BIOS needs to be protected perfectly for preventing the BIOS from being damaged or amended improperly. If the BIOS is abnormal, the computer fails to perform the operation such as hardware initialization and so on, and thus the computer fails to be booted. The BIOS needs to be capable of being amended for adding new functions to support updated computer hardware or for removing bugs in the program, thereby preventing the computer from running abnormally or failing to identify new hardware.

In the early period, the BIOS is stored in an erasable programmable read-only memory (EPROM). To amend the content stored in the EPROM, the EPROM needs to be removed from a slot and be irradiated by ultraviolet light for a long time. Therefore, the EPROM has an advantage that the content cannot be amended by current, and the BIOS stored in the EPROM can avoid damage of a malicious program. However, at the same time, the BIOS cannot be updated in time. In recent years, since the updating speed of the system architecture of the computer is fast, the BIOS needs to be updated at any time to adapt to new hardware architecture. Thus, the present BIOS is stored in a flash memory facilitating update. However, if a write action to the flash memory does not be controlled properly, once the write mode is found, the content of the BIOS may be maliciously damaged or amended easily, thereby causing the computer system unstable or failing to boot the computer.

At present, protection for the BIOS mainly includes hardware protection and software protection. In the hardware protection mode, a jumper is used to control an input signal of the flash memory thus to control writing to the flash memory. In the software protection mode, a group of write instruction sets executed by specific steps is used. However, after a period of time, the specific write instruction sets may be calculated by a reserve engineering method, thereby failing in protection.

### BRIEF SUMMARY OF THE INVENTION

One objective of this invention is to provide a method for updating a basic input/output system (BIOS). A security code is compared to prevent a malicious program or an unauthorized program from amending the BIOS.

According to one embodiment, the BIOS is stored in a first memory of an electronic device. An embedded controller (EC) of the electronic device is electrically connected to the first memory and a processor. The processor is electrically connected to the first memory and executes the BIOS. The method for updating a BIOS of the invention includes the following steps.

First, a write instruction is sent to the EC.

Afterward, the EC sends a system management interrupt (SMI) to the processor after receiving the write instruction.

Then, the processor sends an identification code to the EC after receiving the system management interrupt.

Then, the EC receives the identification code and determines whether the identification code matches a security code.

Finally, if the identification code matches the security code, the EC allows the first memory to be writable to update the BIOS.

According to one embodiment, before the step of sending the write instruction to the EC, the processor may generate the security code when executing the BIOS during a power-on self-test (POST) stage.

According to one embodiment, in the step of receiving the system management interrupt by the processor, if the processor executes an interrupt handler, the processor may send the identification code matching the security code and stop processing the system management interrupt. If the processor does not execute the interrupt handler, the processor may send the identification code different from the security code.

Another objective of the invention is to provide an electronic device. The security code is compared to prevent a malicious program or an unauthorized program from amending the BIOS.

According to one embodiment, the electronic device of the invention includes an EC, a first memory, and a processor. After the EC receives a write instruction, the EC sends a system management interrupt. The first memory stores a BIOS and is electrically connected to the EC. The processor is electrically connected to the EC and the first memory, and it executes the BIOS. The processor sends an identification code to the EC after receiving the system management interrupt from the EC.

The EC receives the identification code and determines whether the identification code matches a security code. If the identification code matches the security code, the EC allows the first memory to be writable to update the BIOS.

Furthermore, the security code is stored in a memory of the electronic device, and the memory may be a system management random access memory (SMRAM). The EC may include a write access, and data may be written into the first memory via the write access. The first memory may be a nonvolatile memory.

To sum up, in the method for updating a BIOS of the invention, according to the sending time of the system management interrupt, whether the write instruction is sent by a malicious program (or an unauthorized program) is determined, thus to generate the identification code the same as or different from the security code. Thereby, the embedded controller can determine whether external programs are allowed to write data to update the BIOS according to the comparison result between the identification result and the security code. In other words, in the invention, according to the sending time of the system management interrupt from the embedded controller and the comparison result between the identification result and the security code, whether the write instruction is sent by a normal program (an official BIOS updating program) or a malicious program can be determined, thereby preventing the BIOS from being maliciously amended or damaged.

These and other features, aspects, and advantages of the present invention will become better understood with regard to the following description, appended claims, and accompanying drawings.

### BRIEF DESCRIPTION OF THE DRAWINGS

FIG. 1 is a block diagram of an electronic device according to an embodiment of the invention; and

FIG. 2 is a flowchart of a method for updating a BIOS according to an embodiment of the invention.

### DETAILED DESCRIPTION OF THE INVENTION

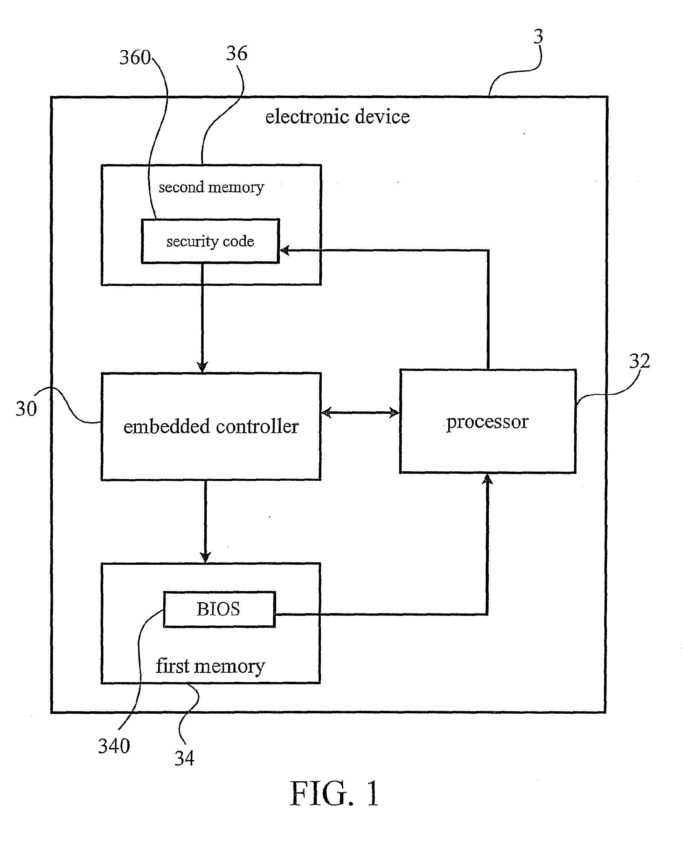

Please refer to FIG 1. FIG 1 is a block diagram of an electronic device 3 according to an embodiment of the invention. In FIG. 1, the electronic device 3 in the embodiment includes an embedded controller (EC) 30, a processor 32, a first memory 34, and a second memory 36. The first memory 34 may be a nonvolatile memory such as a flash memory. The second memory 36 may be a system management random access memory (SMRAM).

The processor 32 is electrically connected to the EC 30, the first memory 34, and the second memory 36. The first memory 34 and second memory 36 are both electrically connected to the EC 30.

The processor 32 executes a basic input/output system (BIOS) 340 stored in the first memory 34, and the processor 32 generates a security code 360 and stores the security code 360 in the second memory 36. After receiving a write instruction, the EC 30 sends a system management interrupt (SMI) to the processor 32. After receiving the SMI, the processor 32 sends an identification code to the EC 30.

However, an embodiment is described in detail hereinbelow to illustrate how to achieve a method for updating a BIOS in the invention by the signal transmission and the responding mode between different components of the electronic device.

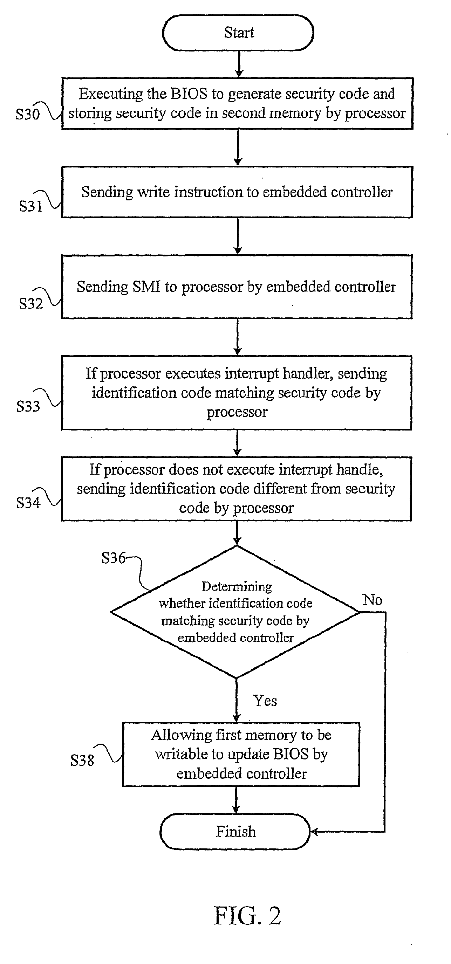

Please refer to FIG. 2. FIG. 2 is a flowchart of a method for updating a BIOS according to an embodiment of the invention. In FIG 2, in the embodiment, the method for updating a BIOS includes the following steps.

First, step S30 is performed. The processor 32 executes the BIOS 340 stored in the first memory 34 and generates the security code 360 in a power-on self-test (POST) stage. The security code 360 is stored in the second memory 36.

In the POST stage, the BIOS 340 performs a connecting initialization action for different kinds of peripheral components such as a hard disk, an optical driver, a memory and so on. The malicious program still cannot control the system resource in the POST stage. Therefore, the security code 360 generated by the BIOS 340 in the POST stage is reliable. Further, the security code 360 is stored in the second memory 36 of the electronic device 3, such as a SMRAM. The SMRAM is a memory block of a dynamic random access memory (DRAM) and can only be read by specific programs. Thereby, the security code 360 cannot be read by the malicious programs. In fact, the security code 360 is a group of random numbers, and the group of random numbers is nonzero. In detail, the group of random numbers has four bytes, and any of the bytes is nonzero.

Then, step S31 is performed. The write instruction is sent to the embedded controller 30.

Generally speaking, the write instruction can be a series of executable codes or command sets. The write instruction is used to allow the EC 30 to open the write access. Thus, the subsequent data needing to be written into the first memory 34 can update the BIOS 340 via the write access. However, a conventional EC cannot determine whether the write instruction is generated by a normal program (such as an official BIOS updating program) or a malicious program (such as a computer virus). Therefore, if the malicious program can send the right write instruction, then it can update the BIOS 340 with errors or random data randomly. Thus, the BIOS 340 fails to be executed by the processor 32 rightly, or the hardware is damaged (for example, when the BIOS stores improper data and sets a greater voltage value for a peripheral component, the peripheral component may be damaged).

Then, step S32 is performed. The EC 30 sends a SMI to the processor 32 after receiving the write instruction.

If the processor 32 executes an interrupt handler, then step S33 is performed. The processor 32 sends the identification code matching the security code 360 and stops processing the SMI. On the other hand, if the processor 32 does not execute the interrupt handler, then step S34 is performed. The processor sends the identification code different from the security code 360.

In the conventional art, after the EC receives the write instruction, the EC does not send the SMI to the processor 32, and the EC directly opens the write access. However, in the embodiment of the invention, the objective that the EC 30 sends the SMI is to make the processor 32 indirectly determine whether the write instruction received by the EC 30 at that moment is sent by a normal program or a malicious program according to the time when the SMI is received.

In detail, when the processor 30 receives the SMI, the processor 32 executes the interrupt handler to correspondingly process the received SMI. The interrupt handler is not re-entry. That is, if the processor 32 executes the interrupt handler, the processor 32 cannot process a new SMI until the present executed interrupt handler is terminated. Therefore, in the method for updating the BIOS in the embodiment of the invention, the processor 32 does not process the SMI sent by the EC 30 in time. However, when the malicious program is to update the BIOS, the processor 32 is not allowed to execute the interrupt handler, so that the SMI can be processed in time. Therefore, the processor 32 can determine whether the SMI can be processed in time at present and send different identification codes according to the above determination.

Therefore, before the processor 32 receives the SMI corresponding to the instruction for updating the BIOS, the official BIOS updating program can allow the processor 32 to execute the interrupt handler. When the processor 32 receives the SMI corresponding to the instruction for updating the BIOS, the processor 32 can read the security code 360 from the second memory 36 and send the identification code the same as the security code 360 to the EC 30. On the other hand, if the processor 32 does not execute the interrupt handler, when the processor 32 receives the SMI corresponding to the instruction for updating the BIOS, the processor 32 can determine that the SMI is sent by a malicious program or sent by a non-official BIOS updating program. Thus, the processor 32 sends the identification code different from the security code 360 to the EC 30.

Then, step S36 is performed. The EC 30 receives the identification code and determines whether the identification code matches the security code.

Finally, if the determination in step S36 is yes, then step S38 is performed. The EC 30 allows the first memory 34 to be writable to update the BIOS. If the determination in step S36 is no, the updating process is finished.

In step S32, after sending the SMI corresponding to the write instruction, the EC 30 reads the security code 360 stored in the second memory 36 and waits for the identification code sent by the processor 32. After receiving the identification code, the EC 30 can selectively open the write access connected to the first memory 34 (such as a flash memory) according to the comparison result between the identification code and the security code. Certainly, if the identification code is the same as the security code, the write access is opened to allow the first memory 34 to be writable to update the BIOS.

A flash memory as the first memory 34 is taken for example. When a pin voltage of the flash memory is greater than a threshold value, the flash memory is writable. On the other hand, when the pin voltage of the flash memory is less than the threshold value, the flash memory is unwritable. The EC 30 can control the pin voltage of the first memory 34. When the EC 30 allows the first memory 34 to be writable, the EC 30 makes the pin voltage of first memory 34 over the threshold value. Thus the first memory 34 is writable.

If the identification code is different from the security code, the EC 30 does not open the write access. Otherwise, after the EC 30 finds that the identification code is different from the security code, the EC 30 can still receive the data sent by external programs. However, the EC 30 discards the data instead of loading the data in the write access. Thus, the malicious program is terminated as wrong determining that the data has been written. Further, the BIOS 340 stored in the first memory 34 does not be really updated. Thereby, the malicious program is terminated and the BIOS 340 is protected.

According to the above description in step S30, the security code 360 is nonzero. If the electronic device 3 is to update the BIOS with a conventional method, the security code 360 can be zero. In the subsequent flow path, the EC 30 still sends the SMI after receiving the write instruction. However, when the EC 30 reads the security code 360 from the second memory 36 and the security code 360 is zero, regardless of the receiving time of the SMI, the processor 32 sends the identification code which is zero. When the EC 30 receives the identification code and finds that the identification code and the security code are both zero, the EC 30 does not compare the security code with the identification code, and it directly opens the write access. In one word, the conventional method for updating the BIOS can be integrated into the method in the invention by setting the value of the security code. Furthermore, the electronic device 3 in the invention can be suitable for more conditions. The electronic device 3 not only can use the method for updating the BIOS in this invention, but also can use the conventional method for updating the BIOS.

Compared with the conventional art, in the method for updating a BIOS of the invention, according to the sending time of the system management interrupt, whether the write instruction is sent by a malicious program (or an unauthorized program) is determined, thus to generate the identification code the same as or different from the security code. Thereby, the embedded controller can determine whether external programs are allowed to write data to update the BIOS according to the comparison result between the identification result and the security code. In other words, in the invention, according to the sending time of the system management interrupt from the embedded controller and the comparison result between the identification result and the security code, whether the write instruction is sent by a normal program (an official BIOS updating program) or a malicious program can be determined, thereby preventing the BIOS from being maliciously amended or damaged. In addition, by setting the value of the security code, the electronic device in the invention can be suitable for different conditions by selectively using the conventional method for updating the BIOS or the method for updating the BIOS in the invention.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.
This invention discloses a method for updating a basic input/output system (BIOS). The BIOS is stored in a memory of an electronic device. An embedded controller (EC) is electrically connected to the memory and a processor. The processor is electrically connected to the memory and executes the BIOS. The method for updating the BIOS includes the following steps. First, a write instruction is sent to the EC. Afterward, the EC receives the write instruction and sends a system management interrupt (SMI) to the processor. Then, the processor receives the SMI and sends an identification code to the EC. Then, the EC receives the identification code and determines whether the identification code matches a security code. If the identification code matches the security code, the EC allows the memory to be writable to update the BIOS.

## Claims

1. A method for updating a basic input/output system (BIOS), the BIOS stored in a first memory of an electronic device, an embedded controller of the electronic device electrically connected to the first memory and a processor, and the processor electrically connected to the first memory and executing the BIOS, the method comprising the steps of:
sending a write instruction to the embedded controller;
sending a system management interrupt to the processor after receiving the write instruction by the embedded controller;
sending an identification code to the embedded controller after receiving the system management interrupt by the processor;
receiving the identification code and determining whether the identification code matches a security code by the embedded controller; and
if the identification code matches the security code, allowing the first memory to be writable to update the BIOS by the embedded controller.

2. The method for updating a BIOS according to claim 1, wherein before the step of sending the write instruction to the embedded controller, the processor executes the BIOS to generate the security code and stores the security code in a second memory electrically connected to the processor and the embedded controller.

3. The method for updating a BIOS according to claim 2, wherein the processor generates the security code when executing the BIOS during a power-on self-test (POST) stage.

4. The method for updating a BIOS according to claim 2, wherein the second memory is a system management random access memory (SMRAM).

5. The method for updating a BIOS according to claim 1, wherein in the step of receiving the system management interrupt by the processor, if the processor executes an interrupt handler, the processor sends the identification code matching the security code.

6. The method for updating a BIOS according to claim 5, wherein if the processor executes the interrupt handler, the processor stops processing the system management interrupt.

7. The method for updating a BIOS according to claim 5, further comprising the step of:
if the processor does not execute the interrupt handler, sending the identification code different from the security code by the processor.

8. The method for updating a BIOS according to claim 1, wherein the security code is a group of random numbers, and the group of random numbers is nonzero.

9. The method for updating a BIOS according to claim 8, wherein the group of random numbers has four bytes, and any of the bytes is nonzero.

10. The method for updating a BIOS according to claim 1, wherein in the step of the allowing the first memory to be writable by the embedded controller, the embedded controller includes a write access, and data can be written into the first memory via the write access.

11. The method for updating a BIOS according to claim 1, wherein the first memory is a nonvolatile memory.

12. An electronic device comprising:
an embedded controller sending a system management interrupt after receiving a write instruction;
a first memory storing a BIOS and electrically connected to the embedded controller; and
a processor electrically connected to the embedded controller and the first memory, the processor executing the BIOS and sending an identification code to the embedded controller after receiving the system management interrupt from the embedded controller;
wherein the embedded controller receives the identification code and determines whether the identification code matches a security code, and if the identification code matches the security code, the embedded controller allows the first memory to be writable to update the BIOS.

13. The electronic device according to claim 12, further comprising a second memory electrically connected to the processor and the embedded controller, the second memory storing the security code.

14. The electronic device according to claim 13, wherein the processor generates the security code when executing the BIOS during a power-on self-test (POST) stage.

15. The electronic device according to claim 13, wherein the second memory is a system management random access memory (SMRAM).

16. The electronic device according to claim 12, wherein when the processor receives the system management interrupt, if the processor executes an interrupt handler, the processor sends the identification code matching the security code.

17. The electronic device according to claim 16, wherein if the processor executes the interrupt handler, the processor stops processing the system management interrupt.

18. The electronic device according to claim 16, wherein if the processor does not execute the interrupt handler, the processor sends the identification code different from the security code.

19. The electronic device according to claim 12, wherein the security code is a group of random numbers, and the group of random numbers is nonzero.

20. The electronic device according to claim 19, wherein the group of random numbers has four bytes, and any of the bytes is nonzero.

21. The electronic device according to claim 12, wherein the embedded controller includes a write access, and data can be written into the first memory via the write access.

22. The electronic device according to claim 12, wherein the first memory is a nonvolatile memory.
